# EUROPEAN PATENT APPLICATION

(11) **EP 2 000 000 A1**
(43) Date of publication of application: **10.12.2008**
(21) Application number: 07109822.2
(22) Date of filing: 07.06.2007
(51) Int. Cl.: H01M 8/16, H01M 4/86

(54) **Microbial fuel cell**

(71) Applicant: Danmarks Tekniske Universitet, 2800 Lyngby (DK)
(72) Inventor: Angelidaki, Irini, 2000, Frederiksberg (DK); Min, Booki, 2720, Vanløse (DK)
(74) Representative: Plougmann & Vingtoft A/S

(57) **Abstract**

A novel microbial fuel cell construction for the generation of electrical energy. The microbial fuel cell comprises: (i) an anode electrode, (ii) a cathode chamber, said cathode chamber comprising an inlet through which an influent enters the cathode chamber, an outlet through which an effluent depart the cathode chamber, a cathode electrode and an electrolyte permeable membrane, wherein both the anode electrode and the cathode chamber are to be submersed into an anaerobic environment to generate electrical energy.

## Description

### FIELD OF THE INVENTION

The present invention relates to a novel microbial fuel cell construction. In particular the present invention relates to a microbial fuel cell (MFC) comprising an anode electrode and a cathode chamber, wherein both the anode electrode and the cathode chamber are to be submersed into an anaerobic environment to generate electricity from organic matter in the anaerobic environment.

### PRIOR ART

Limiting the dependency on fossil fuels and lowering the amount of pollution generated, constitute a major challenge to modern society. Bioprocesses wherein organic matter is converted into bio-energy simultaneously achieve the objective of pollution control and sustainable energy production. Such bioprocesses may include methanogenic anaerobic digestion to produce methane, hydrogen fermentation to produce hydrogen and MFC's to produce bioelectricity. Anaerobic digestions of e.g. industrial and agricultural wastewater which comprise high levels of easily degradable organic matter to methane is a well known process employed at full-scale plants all over the world. The methanogenic anaerobic digestion technology, comprise however an obvious drawback as approximately 70% of the energy produced during conversion of methane to electricity is lost in generators as heat. Further to this, the hydrogen fermentation technology also suffers form severe inefficiencies, as it at best, utilize only about 15% of the energy content in organic matter. Accordingly the most promising technology for energy production from organic matter, is the MFC which has been of interest to researchers around the world for the past decades. Although MFC's generate a lower amount of electrical energy than hydrogen fuel cells, a combination of both electricity production and e.g. wastewater treatment may reduce the cost of treating primary effluent wastewater

MFC's are devices that directly convert microbial metabolic power generated from the degradation of organic matter into electrical energy via both biotic- and abiotic catalysts. The MFC's disclosed in prior art may be composed of two chambers; an anode chamber where the oxidation of organic compounds takes place by microorganisms under anaerobic condition and a cathode chamber where an oxidant such as oxygen or ferriccyanide is reduced under aerobic condition. The cathode electrode is generally either immersed in a phosphate buffer or ferricyannide solution, or open to dry air.

One of the most promising applications of the MFC technology described in prior art is the generation of electrical energy from i.e. wastewater and other undesirable substrates. Several studies on electricity production from artificial or real domestic wastewater, animal wastewater, food wastewater, and recently hydrolysate from corn stover biomass has been conducted and for this purpose several different types of MFCs has been developed both for batch and continuous mode operations.

Accordingly, the two most predominant benefits of using the MFC technology for power generation from degradable organic matter is that: (i) it can theoretically extract more energy from organic matter compared to other related technologies as no intermediate process is necessary for electricity generation and (ii) it can be used as a green treatment technology by completely oxidizing organic matter in wastewater to carbon dioxide with a minimum emission of air pollutants.

The use however, of the MFC's disclosed in prior art still remains limited for field application as difficulties of applying the MFC technology to natural environments exist. When applying conventional MFC's in e.g. wastewater treatment, a steady flow of wastewater needs to be pumped into the anaerobic chamber to feed the bacteria, which accordingly is expensive, take up a lot of space and most importantly limits the use of the MFC technology.

Consequently, there exists a need for an improved MFC construction wherein the construction costs have been reduced and wherein the MFC may easily be employed in both natural and artificially constructed environments.

### SUMMARY OF THE PRESENT INVENTION

Accordingly, the aim of the present invention is to provide a MFC that solves the above mentioned problems of the prior art with an improved construction, wherein the MFC may be employed in both natural and artificially constructed environments.

In an aspect of the present invention, the MFC comprises:
(i) an anode electrode
(ii) a cathode chamber, said cathode chamber comprising an inlet through which an influent enters the cathode chamber, an outlet through which an effluent depart the cathode chamber, a cathode electrode and an electrolyte permeable membrane,
wherein both the anode electrode and the cathode chamber are to be submersed into an anaerobic environment to electrical energy.

In another aspect of the present invention, a combined electrode is provided. The combined electrode comprises:
(i) an anode electrode
(ii) a cathode chamber, said cathode chamber comprising an inlet through which an influent enters the cathode chamber, an outlet through which an effluent depart the cathode chamber, a cathode electrode and an electrolyte permeable membrane, and
wherein both the anode electrode and the cathode chamber are to be submersed into an anaerobic environment to generate electrical energy and wherein the anode electrode is in direct contact with the cathode chamber.

In yet another aspect of the present invention a method is provided for obtaining bioenergy. The method comprises the steps of:
(i) submersing one or more anode electrode(s) and one or more cathode chamber(s), said cathode chamber comprising an inlet through which influent enters the cathode chamber, an outlet through which the effluent depart the cathode chamber, a cathode electrode and a electrolyte membrane and one or more combined electrodes into an anaerobic environment,
(ii) permitting microorganisms in the anaerobic environment to oxidize reduced organic or inorganic material thereby producing a plurality of electrons and
(iii) obtaining a voltage between the one or more anode electrode(s) and the one or more cathode electrode(s)

In still another aspect of the present invention the use of the MFC and the combined electrode according of the present invention for the generation of electrical energy is provided.

Additional aspects of the present invention relate to the use of the MFC and the combined electrode according to the present invention for bioremediation, for use as a biosensor and for producing bio-hydrogen.

### Brief description of the figures

Figure 1 illustrate a schematic diagram of the MFC
Figure 2 illustrate a schematic diagram of the cathode chamber shown in figure 1
Figure 3 illustrate a schematic diagram of the combined electrode
Figure 4 illustrate a schematic diagram of the cathode chamber shown in figure 3
Figure 5 illustrate a situation wherein several MFC's or combined electrodes are submersed into the same environment.
Figure 6 illustrate voltage generation from the modified wastewater containing acetate (1.6 g/L; SCOD = 1694 ± 20 mg/L) with a 470 Ω resistor in the SMFC. No air flow to the cathode chamber between 5 and 12 hr.

The present invention will now be described in more detail in the following.

### DETAILED DISCLOSURE OF THE PRESENT INVENTION

The inventors of the present invention surprisingly discovered and developed a new MFC construction that simultaneously complies with the low construction costs and applicability in both natural and artificial constructed environments.

The construction of the new MFC for the generation of electrical energy comprises: (i) an anode electrode, (ii) a cathode chamber, said cathode chamber comprising an inlet through which an influent enters the cathode chamber, an outlet through which an effluent depart the cathode chamber, a cathode electrode and an electrolyte permeable membrane, wherein both the anode electrode and the cathode chamber are to be submersed into an anaerobic environment to electrical energy.

In the present context the term "anode electrode" refers to an electrode capable of donating electrons, whereas the term "cathode electrode" in the present context refers to an electrode capable of accepting electrons.

In the present context the term "cathode chamber" relates to a chamber providing an interior different from the environment surrounding the cathode chamber at least in respect of the oxidant content.

In respect of the electrical energy generated by the new MFC, the yield of electrical energy generated may severely affect by the internal resistance voltage drop (IR voltage drop). High IR voltage drop between two electrodes is caused by physical and chemical components present in series in the MFC. Such physical and chemical components may be the distance between the anode electrode and the cathode electrode, the type of electrolyte and the cell configuration (i.e. the bridge for proton transfer of the two chambers). High IR voltage drop lead to a reduction in the yield of electrical energy generated and constitute a significant problem in the prior art MFC technology. The present invention provides a MFC and or a combined electrode capable of lowering the IR voltage drop and thus increasing the yield of electrical energy generated.

In the present context the term "IR voltage drop" relates to the internal resistance occurring between the anode electrode and cathode electrode.

Low IR voltage drop may be provided by the present invention by regulating the distance between the anode electrode and the cathode electrode. Dependent on the operational conditions the distance between the anode electrode and the cathode chamber may be 5 cm or less, such as 4 cm or less, e.g. 3 cm or less, such as 2 cm or less, e.g. 1 cm or less.

In an embodiment of the present invention the cathode chamber may be either fully or partly surrounded by the anode electrode. Thus, it may be preferred that at the most 90% of the cathode chamber is surrounded by the anode electrode, such as at the most 80 %, e.g. at the most 70%, such as at the most 60 %, e.g. at the most 50%, such as at the most 40 %, e.g. at the most 30%, such as at the most 20 %, e.g. at the most 10%, such as in the range of 10-60%, e.g. in the range of 20-80%, such as in the range of 30-70%, e.g. in the range of 40-50%. In the present context the term "fully surrounded" relates to a cathode chamber, wherein the cathode chamber at all sides is facing the anode electrode. This aspect also applies for a cathode chamber comprising various geometrical shapes.

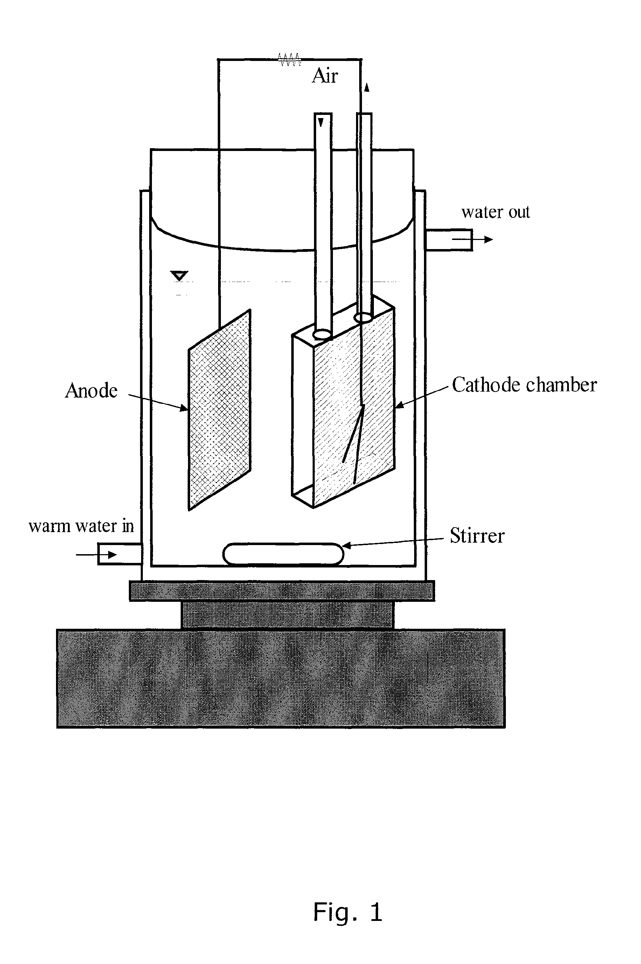

In yet an embodiment of the present invention, only one side of the cathode chamber may be facing the anode electrode. In the present invention the term "facing" refers to a position wherein the anode electrode and the cathode chamber is positioned front on as shown in figure 1.

### Influent & effluent

In the present context the term "influent" refers to a gas, liquid or combination hereof flowing in or into the cathode chamber. In a preferred embodiment of the present invention the influent may be an oxidant in the form of either gas, liquid or a combination hereof. The gas oxidant may be selected from the group consisting of air, oxygen, methane, ethane, other vapour gasses or any other gas-type oxidants whereas the liquid oxidant may be air saturated water or ferricyanide solution.

In the present context term "effluent" refers to a gas, liquid or combination hereof flowing out or forth the cathode chamber. In a preferred embodiment of the invention the effluent may comprise water and air, ferricyanide and ferricyanide chemicals or any other redox couples. In the present context the term "redox couples" relates to couples of oxidising and reducing agents, wherein an oxidising agent is an agent that gain electrons and wherein a reducing agent is a reagent that undergoes a loss of electrons.

### Cathode chamber

The cathode chamber as described above may comprise a cathode electrode, said cathode electrode being capable of accepting electrons.

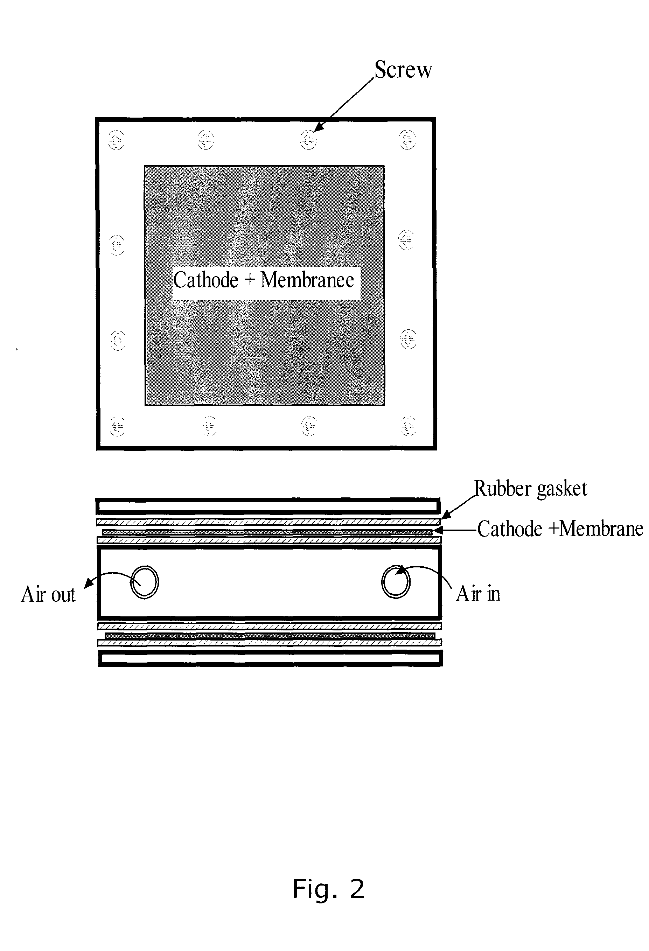

In an embodiment of the present invention it may be preferred that the cathode chamber may be either partially or fully constructed in a sandwich type of way wherein the cathode electrode may ben contact with one side of the electrolyte permeable membrane by substantially fully overlapping or by partial overlapping the electrolyte membrane as illustrated in figure 2.

In an embodiment of the present invention the cathode electrode is overlapping the electrolyte membrane by at least 5%, such as at least 10%, e.g. at least 25%, such as at least 50%, e.g. at least 75%, such as at least 80%, e.g. at least 90%, such as at least 95%.

In the present context the term "substantially fully overlapping" relates to a separate cathode electrode and a separate electrolyte membrane being placed on top of one another.

In the present context the term "partial overlapping" relates to a separate cathode electrode and a separate electrolyte membrane being overlapping with only one part of either the cathode electrode or the electrolyte membrane.

A partial overlap of 100% relates to full overlap and a deviation of 5% from the 100% full overlap relates to substantially full overlap.

In yet an embodiment of the present invention the cathode electrode and the electrolyte permeable membrane are laying adjacent to one another. This means that the cathode electrode and the electrolyte permeable membrane are placed in contact with each other (touching each other). An overlap of 0% (but in contact) relates to the term "laying adjacent", furthermore, an overlap of less than 5% may be considered being within the term of "laying adjacent", such as an overlap of at the most 4%, e.g. an overlap of the most 3%, such as an overlap of the most 2% or e.g. an overlap of the most 1%. In yet an embodiment of the present invention one side of the electrolyte permeable membrane is in contact with the cathode electrode.

In yet an embodiment of the present invention the cathode electrode and the electrode permeable membrane may be pressed together by hot pressing or other pressing methods known to a person skilled in the art.

It is be preferred that the various surfaces of the cathode chamber of the present invention may comprise various geometrical shapes , thus in a preferred embodiment of the present invention the geometrical shapes may be selected from the group consisting of polygon, triangle, parallelogram, penrose tile, rectangle, rhombus, square, trapezium, quadrilateral, polydrafter, annulus, arbelos, circle, circular sector, circular segment, crescent, lune, oval, Reuleaux polygon, rotor, sphere, salinon, semicircle, triquetra Yin-Yang or a combination hereof.

It is preferred that the cathode chamber may comprise the shape of a cube, a cylinder, a rectangular prism, a sphere, a ellipsoid, a pyramid, a cone or other volume formulations

### Anode electrode

The materials selected to be used as an anode electrode may be an insoluble electron acceptor. The insoluble electron acceptor may be selected from the group consisting of glassy carbon, graphite plates, rods and carbon fibrous material such as felt, cloth and paper.

Preferably, the anode electrode comprises a continuous insoluble electron acceptor. In the present context the term "continous" relates to a material which may be the insoluble electron acceptor or which may be a material coated with the insoluble electron acceptor, which is provided without interruption. Accordingly, it is not an aspect of the present invention to mix small grains of insoluble electron acceptors into the anaerobic environment.

### Cathode electrode

The materials selected to be used as a cathode electrode is selected so as to obtain a sufficient reduction reaction. In an embodiment of the present invention the cathode electrode may comprise a metal catalyst, non-metal catalyst or a combination thereof. Preferably, the metal catalyst is a noble metal catalyst, non-noble metal catalyst or a combination thereof, wherein the noble metal catalyst may be Pt or other known noble metal catalyst and wherein the non-noble metal catalyst may be Co or Fe or other known non-noble metal catalysts.

In a further embodiment of the present invention one side of a cathode electrode, which may be in contact with electrolyte permeable membrane, may comprises a metal catalyst, non-metal catalyst or a combination thereof in the case wherein oxygen is used as an oxidant.

### Electrolyte permeable membrane

Electrolyte permeable membrane may be a semi permeable membrane being impermeable to gasses as well as resistant to the reducing environment at the anode as well as the harsh oxidative environment in the cathode chamber.

Electrolyte permeable membrane are well known to a person skilled in the art and may be composed of polymer membranes or from composite membranes where other materials are imbedded in a polymer matrix and. In an embodiment of the present invention the electrolyte permeable membrane may comprise a proton exchange membrane, a cation exhange membrane or a combination hereof.

In a further embodiment of the present invention the electrolyte membrane comprises at least 40%, e.g. at least 50%, such as at least 60%, e.g. at least 70%, such as at least 80%, e.g. at least 90%, such as 100% of the cathode chamber surface, such as in the range of 40-100%, e.g. in the range of 60-95%, such as in the range of 55-88%, eg. in the range of 30-80%, such as in the range of 20-45%, e.g. in the range of 10-30%.

### Anaerobic environment

In the present context the term "anaerobic environment" refers to an environment absent in an oxidant, such as oxygen or to an environment comprising very low oxygen concentrations. The term "anaerobic environment" also covers the term "anoxic" indicating absence or very low concentrations of electron acceptors such as nitrate or sulphate.

In an embodiment of the present invention the anaerobic environment may either by a naturally occurring anaerobic environment, an artificially generated anaerobic environment or a combination thereof. Preferably, the naturally occurring anaerobic environment may be selected from the group consisting of wetlands, sea sediments, fresh water sediments and any other natural environments containing reduced organic or inorganic matter, whereas the artificially occurring environment may selected from the group consisting of fermentation plants, manure plants, sludge plants, hydrolysate producing plants, food processing plants, and any other reduced organic or inorganic waste plants.

It may be preferable to mix a naturally occurring anaerobic environment with an artificially occurring anaerobic environment.

It may be easily recognised by a person skilled in the art that the microbial fuel cell and/or the combined electrode of the present invention may be generating electrical energy from reduced organic or inorganic matter present or added to the anaerobic environment

In a further embodiment of the present invention the anaerobic environment may act as an anode electrode chamber and wherein the anode chamber may surround the cathode chamber.

Preferably, at least 40% of the cathode chamber is surrounded by the anaerobic environment, such as at least 50%, e.g. at least 60%, such as at least 70%, e.g. at least 80%, such as at least 90%, e.g. 100% so as to increase the yield of electrical energy generated. Accordingly it may be preferable that all parts of the anode electrode and the cathode chamber are surrounded by the anaerobic environment.

### Combined electrode

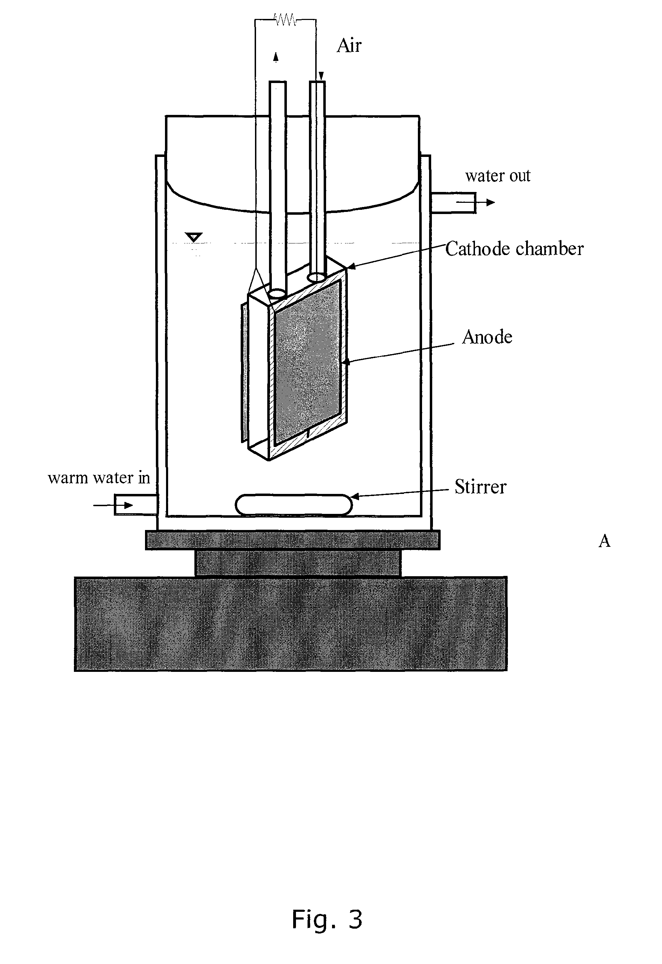

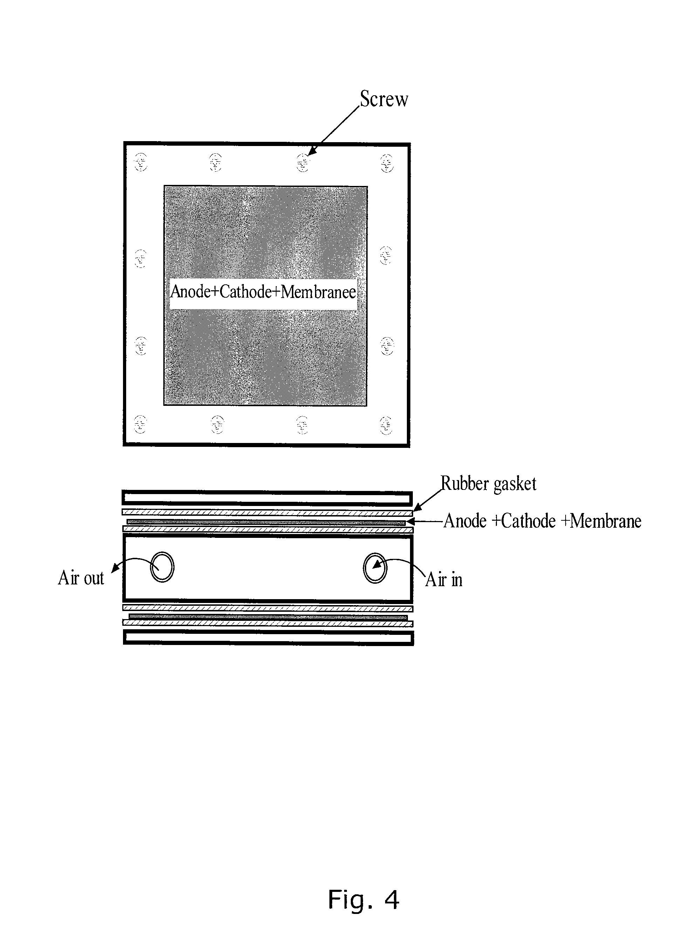

In an additional embodiment of the present invention, the MFC may be constructed as a combined electrode as illustrated in figure 3. Thus, the distance between the anode electrode and the cathode chamber is 0 cm as illustrated in figure 3 and 4. In a preferred embodiment, the combined electrode comprise:
(i) an anode electrode,
(ii) a cathode chamber, said cathode chamber comprising an inlet through which an influent enters the cathode chamber, an outlet through which an effluent depart the cathode chamber, a cathode electrode and an electrolyte permeable membrane,
   wherein both the anode electrode and the cathode chamber are to be submersed into an anaerobic environment to generate electrical energy and wherein the anode electrode is in direct contact with the cathode chamber

It may be preferred that the anode electrode comprise at least 20%, such as at least 30%, e.g. at least 40%, such as at least 50%, e.g. at least 60%, such as at least 70%, e.g. at least 80%, such as at least 90% of the cathode chamber surface, such as in the range of 30-90%, e.g. in the range of 40-80%, such as in the range of 50-70%, e.g. in the range of 50-60%, such as in the range of 60-70% e.g. in the range of 70-80%.

### Increasing energy yield

As mentioned above it is an object of the present invention to simultaneously achieve pollution control and provide a sustainable energy production. In order to achieve an increased yield of electrical energy generated it is preferred that two or more microbial fuel cell or combined electrodes are connected, such as 3 or more, e.g. 4 or more, such as 5 or more, e.g. 10 or more, such as 20 or more, e.g. 50 or more, such as 100 or more, e.g. 150 or more, such as 200 or more, e.g. 300 or more, such as 400 or more, e.g. 500 or more as illustrated in figure 3.

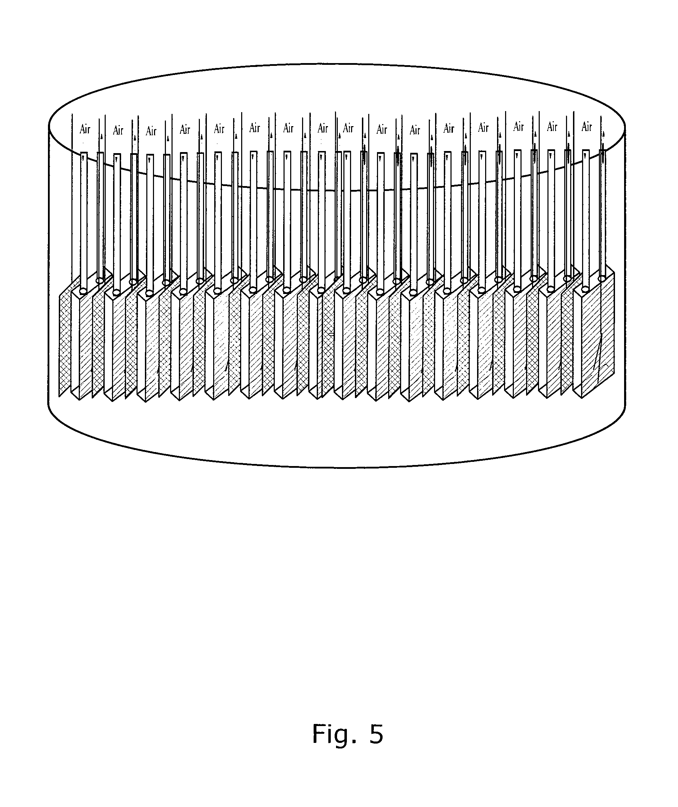

In a further embodiment of the present invention one microbial fuel cell or combined electrodes or the two or more microbial fuel cells or combined electrodes such as two or more, e.g. 3 or more, such as 5 or more, e.g. 10 or more, such as 20 or more, e.g. 50 or more, such as 100 or more, e.g. 150 or more, such as 200 or more, e.g. 300 or more, such as 400 or more, e.g. 500 or more may be submersed into the same anaerobic environment as illustrated in figure 5.

### Method for obtaining bio-energy

The inventors of the present invention have furthermore provided a method for obtaining bio-energy. The method comprises the steps of:
(i) submersing one or more anode electrode(s) and one or more cathode chamber(s), said cathode chamber comprising an inlet through which influent enters the cathode chamber, an outlet through which the effluent depart the cathode chamber, a cathode electrode and a electrolyte membrane and one or more combined electrodes into an anaerobic environment
(ii) permitting microorganisms in the anaerobic environment to oxidize reduced organic or inorganic material thereby producing a plurality of electrons and
(iii) obtaining a voltage between the one or more anode electrode(s) and the one or more cathode electrode(s).

In the present context the term "bio-energy" relates to electrical energy made available from materials derived from biological sources, such as the organic and inorganic matter, present in the anaerobic environment, in which the one or more anode electrode(s) and the one or more cathode chamber(s) are submerged. It is an embodiment of the present invention the organic matter may either by inherently present in or added to the anaerobic environment.

In a further embodiment of the present invention, it is preferable the microorganisms are either inherently present in or added to the anaerobic environment. It is preferred that the microorganisms are anaerobic or facultative anaerobic or a combination hereof in order to tolerate the anaerobic environment and thus be capable of oxidizing compounds present in such anaerobic environment.

In an embodiment of the present invention, the anaerobic microorganisms may be *Geobacter* species, *Desulfuromonas* species or other types of anaerobic microorganisms and the facultative anaerobic microorganisms may be *Shewanella* species or other types of facultative anaerobic microorganisms. Said microorganisms may comprise pure cultures or mixed cultures or a combination thereof.

It is an object of the present invention that the microbial fuel cell and the combined electrode as described above may be used for the generation of electrical energy. In other preferred embodiments the microbial fuel cell and the combined electrode may be used for bioremediation wherein e.g. specific soil contaminants are degraded by bacteria to compounds less contaminating or to not contaminating compounds.

In the present context the term "bioremediation" relates a process wherein an environment altered by contaminants is returned to its original condition.

In yet an embodiment of the present invention the microbial fuel cell and the combined electrode may be used as a biosensor to e.g. monitor the conversion of organic matter in specific environments such as anaerobic environments.

In the present context the term "biosensor" relates to a device or devices that use biological materials to monitor the presence of e.g. various chemicals in an environment by electrical, thermal or optical signals.

In a further embodiment of the present invention the microbial fuel cell and the combined electrode may be used for the production of bio-hydrogen. In the present context the term "bio-hydrogen" relates to hydrogen produced via biological processes with an additional potential provided electrochemically.

It should be noted that embodiments and features described in the context of one of the aspects of the present invention also apply to the other aspects of the invention.

The invention will now be described in further details in the following non-limiting examples.

### Embodiments of the present invention

Figure 1. schematic diagram of the MFC
   Figure 1 illustrate a MFC composed of an anode electrode and a cathode chamber which is submersed into an anaerobic environment, such as a glass reactor. The reactor may be covered by a rubber stopper for maintaining the medium in anaerobic condition. The MFC may be warped up in another larger container in which warm water flows from the bottom to the top for controlling the solution temperature of the MFC. In an embodiment of the present invention the anode electrode may comprise a 4 cm x 4 cm piece of not wetproofed plain carbon paper and thecathode electrode may comprise a 5 % wet proofed carbon paper (4 cm by 4 cm) whereinone side of the electrode may comprise Pt catalysts. The Pt coated side may be hot pressed with a electrolyte permeable membrane, providing a membrane cathode assembly. All metal parts may be covered using e.g. silicon glue. Preferably the distance of the anode and cathode electrode may be approximately 3 cm in the reactor. The magnetic stirring bar may be placed at the bottom of the reactor for mixing the solution. Airmay be provided to the cathode chamber as an oxidant. The electric current between two electrodes may be measured by a multimeter with a fixed resistance.
Figure 2. Schematic diagram of the cathode chamber shown in Figure 1
   Figure 2 illustrate a cathode chamber which may comprise a one nonconductive polycarbonate plate having a square hole of total volume of approximately 16 cm³.There are two holes on the top of the chamber for e.g. air flow and electrical outlet. Two membrane cathode assemblies may be placed on both sides of the cathode chamber, and then the chamber may be sealed with a rubber gasket and stainless steel bolts and nuts.
Figure 3. Schematic diagram of the combined electrode
   Figure 3 illustrate a MFC as illustrated in Figure 1. In the present figure the anode is in contact with the membrane cathode assembly, forming a combined electrode.
Figure 4. Schematic diagram of the cathode chamber shown in Figure 3
   Figure 4 illustrate a cathode chamber as illustrated in Figure 2. In the present figure the anode is in contact with the membrane cathode assembly.
Figure 5. Illustrate a situation wherein several MFC's or combined electrodes are submersed into the same environment.
   Figure 5 illustrate a number of MFC are to be submersed into a naturally occurring or artificially generated anaerobic environment to generate electrical energy from organic or inorganic matters.

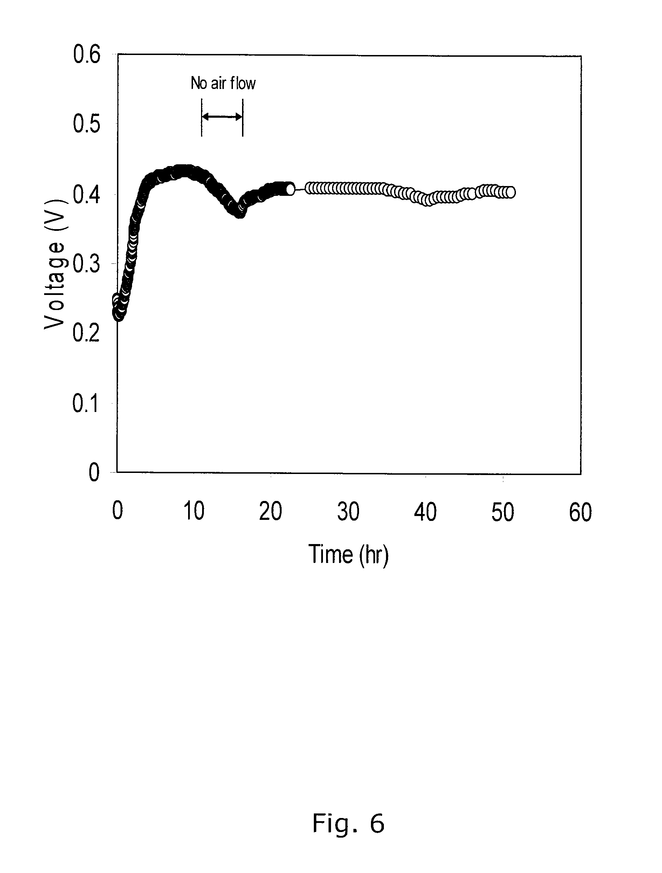

Figure 6 Illustrate voltage generation.
   Figure 6 Illustrate voltage generation from the modified wastewater containing acetate (1.6 g/L; SCOD = 1694 ± 20 mg/L) with a 470 Ω resistor in the SMFC. No air flow to the cathode chamber between 5 and 12 hr.

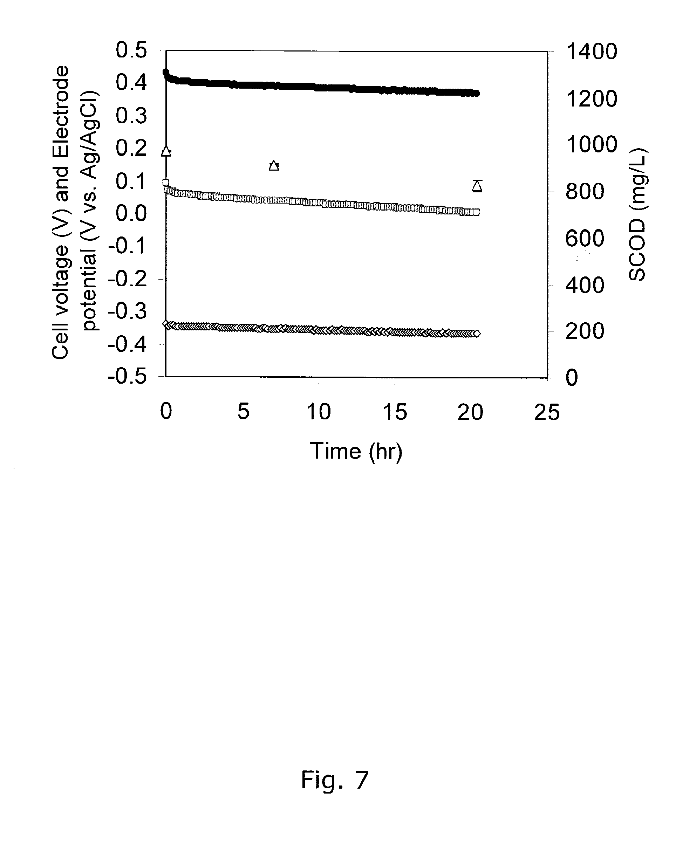

Figure 7. Illustrate cell voltage
   Figure 7 illustrate cell voltage as a function of time, with a cathode electrode used for several runs of the SCP, SCOD (Δ), cell voltage (•) and two electrode potentials (anode: ◇; cathode:□).

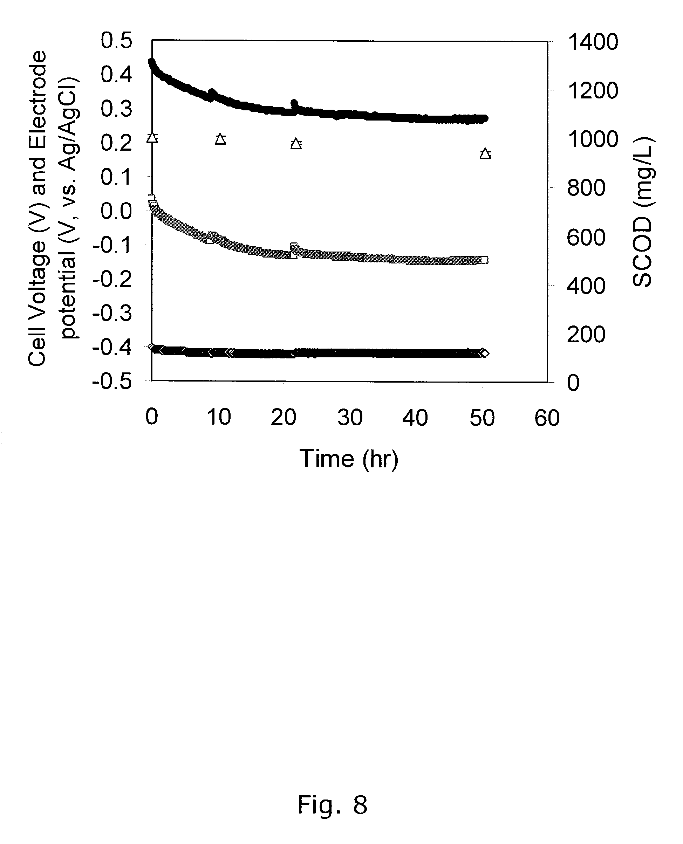

Figure 8. Illustrate cell voltage
   Figure 8 illustrate cell voltage as a function of time, after drying out the cathode used in figure 7, SCOD (Δ), cell voltage (•) and two electrode potentials (anode: ◇; cathode:□).

### EXAMPLES

### Exam configuration and voltage generation

### Materials and methods

### Anaerobic environment:

Domestic wastewater was collected after a fine screen process of the Lundtofte Wastewater Treatment Plant (Lyngby, Denmark). The wastewater contained in a glass bottle was first sparged with nitrogen gas and then was placed in a temperature-controlled room at 4 °C prior to being used. Wastewater was used as the anaerobic environment for power generation in the MFC without any additions of nutrients, a phosphate buffer, vitamins, and minerals. For the startup period, acetate was added to wastewater as a fuel at a final concentration of 1.6 g/L. In some tests, wastewater was mixed with a different amount of acetate in order to prepare various chemical oxygen demands (CODs).

### MFC configuration:

The MFC was composed of an anode electrode and a rectangular cathode chamber placed in a glass reactor (total volume= 600mL, liquid volume= 550 mL), wherein the glass reactor act as an anode electrode chamber.(Figure 6). The reactor containing a medium along with an anode electrode and a cathode chamber was covered by a rubber stopper having several openings for liquid and gas samples, air supply to a cathode chamber, a thermometer, and an anode electrode. The MFC was warped up in another larger container in which warm water flows from the bottom to the top for controlling the solution temperature of the MFC. The cathode chamber was one nonconductive polycarbonate plate (5 cm width by 5 cm length by 1 cm depth) having a square hole of total volume of 16 cm³ (4 cm width 4 cm length 1 cm depth). There were two 3mm-diameter holes on the top of the chamber for air flow and electrical outlet. The anode electrode was a 4 cm x 4 cm piece of not wetproofed plain carbon paper (Toray carbon paper, company). The cathode electrode was a 5 % wet proofed carbon paper (4 cm by 4 cm), and one side of the electrode contained Pt catalysts (0.5 mg/cm² with 20% pt). The Pt coated side was hot pressed with an electrolyte permeable membrane providing a membrane cathode assembly (Nafion 117, DuPont Company). Two membrane cathode assemblies were placed on both sides of the cathode chamber, and then the chamber was sealed with rubber gasket and stainless steel bolts and nuts.. All metal parts were covered using silicon glue. The distance of the anode and cathode electrode was approximately 3 cm in the reactor.

### MFC operation:

The reactor was operated in batch mode at 30 °C controlled by warm water pumped from a water bath.. About 550 mL of wastewater was contained in a reactor and was purged with nitrogen gas for approximately 30 min prior to being tightly sealed inside an anaerobic glove box (Coy Company). Replacement of the wastewater in the MFC was performed in an anaerobic glove box all the times. The magnetic stirring bar was placed at the bottom of the reactor for mixing the solution at around 300 rpm. The air flow rate to the cathode chamber was about 10 mL/min in all experiments. The electric current between two electrodes was generally measured with a fixed resistor of 470Ω and 180Ω, except for the measurement with various loads using a resistance box..

### Analysis and Calculations:

The wastewater strength was expressed as the average soluble COD (SCOD) based on duplicate samples. All samples were filtered through a 0.2 µm diameter syringe membrane, and in most cases the filtered samples were used immediately for the COD measurement except some samples were stored at a -80 °C refrigerator before the measurement. The determination of COD was performed using cell tests, and the readings were conducted by a photometer using standard methods. The electrolyte resistance between two electrodes was determined by an impedance spectroscopy instrument. The voltage difference between two electrodes was measured across a fixed load every 10 or 30 min., and the data were collected automatically by a data acquisition program and a personal computer. In some test, the external resistor was varied ranging 43 to 22 KΩ to determine the maximum power density and individual electrode potential as a function of different electric current. Current (I) was calculated as a resistance (R) from the voltage (*V*) by *I* = *I* / *V* (Ohm's law), and current density, *i* (A/m²), was calculated as *i=I* / *A,* where *A* is the projected surface area of the anode electrode. Power density, *P* (W/m²), was calculated by multiplying the current density by voltage, *P* = *IV*/*A.* Coulombic efficiency (CE) was calculated based on *CE* = *C_{G}*/*C_{T}* x 100%, where *C_{G}* is the total coulombs calculated by integrating the current generated over time, and *C_{T}* is the theoretical amount of coulombs available based on the measured COD removal in the MFC.

### Results and discussion:

### Voltage generation from the modified wastewater in a MFC:

Within 5 days of a start-up period after inoculation, the MFC generated voltage up to a maximum 492 mV with a fixed 470Ω resistor from modified wastewater containing acetate at a final concentration of 1.6 g/L . This result also suggested that domestic wastewater could support the medium and microorganisms for the power generation during the start up of the SMFC. After two more additional loadings, the MFC produced a stable voltage of 0.428 ± 0.003 V (± standard deviation, n =378) for 7 hrs (5 to 12 hr) from the acetatefed wastewater (SCOD = 1694 ± 20 mg/L; Figure 6). However, the voltage decreased down to 0.373V for about 4 hrs of operational time due to the failure of air supply to the cathode chamber as indicated in the Figure 6. This indicated that air supply is necessary for oxygen reduction for completing the electrical circuit. Restarting air supply to the cathode chamber increased the voltage up to average 0.406 ± 0.003 V over the next 31-hr period.

### Cell voltage and power output as a function of current density:

At some experiment, voltage was measured by varying the loading size from 43 to 22 KΩ across a resistor between the anode and cathode electrodes of the SMFC. The voltage and power output were plotted as a function of current density as shown in Figure 6. An open circuit voltage (OCV, without a circuit load) of 0.720 V was first obtained with the wastewater of SCOD=1672 ± 6 mg/L. However, as current between the electrodes was allowed, the voltage decreased sharply down to 0.612 V (at around 96 mA/m²) possibly showing the presence of a kinetic limitation at the lower current generation. At more current production, IR voltage drop (0.612 V to 0.217 V) was found until a current density of about 827 mA/m². This result indicated that the electrolyte resistance of a real wastewater medium still affected significantly the power output even though the anode and cathode was placed very closely. The significant effect of the electrolyte resistance on power generation was also reported in other MFC studies..A maximum power density of 204 mW/m² was obtained at a current density of 595 mA/m² at 180Ω resistance. This maximum power output in the SMFC containing acetate in the wastewater medium is approximately 5 times higher than the values (range of 38 mW/m² to 43 mW/m²) obtained in a two-chamber membrane MFCs with the artificial nutrient medium containing acetate (Min et al., 2005a). However, this power generation was lower in comparison with that from a membraneless single-chamber MFC showing a maximum power density of 506 mW/m² from acetate in a nutrient medium (Liu et al., 2005a). Some of the reasons for this lower power output comparing to the single chamber MFC will be due to lower conductivity of the wastewater medium and the presence of a membrane in the SMFC (Min et al, 2005a; Liu et al., 2005a). The cell voltage further decreased sharply at the range of high current density (>850 mA/m²).

### Potentials of each electrode at different current densities:

Individual electrode potential was measured against an Ag/AgCl reference electrode (0.195 V vs. standard hydrogen electrode, SHE) inserted into the medium of the MFC to exam the performance of each electrode at different current densities. At first, the open circuit potentials (OCPs vs. an Ag/AgCl reference) of the anode and cathode were -0.518 V (-0.323 V vs. SHE) and 0.198 V (0.393 V vs. SHE), respectively. The cathode OCP (OCP_{cathode})of 0.393 V was much less than the theoretical value (0.804 V) calculated by the Nernst equation on the base of pH = 7, 0.2 atm O₂, and 30 °C (51% potential reduction). This OCP_{cathode} from the SMFC was higher than the value (0.358V vs. SHE) for the membrane two-chamber MFC (Min et al., 2005a), but was lower than 0.413V for the single chamber MFC without membrane (Liu et al., 2005a). This lower OCP_{cathode} in the SMFC could be one of the main factors causing the lower power generation in comparison with the single chamber MFC.

However, the OCP of the anode (OCP_{anode}) couldn't be compared directly to the theoretical value because there was no information about the redox pair in microorganism in this study. Instead, if considering the redox potential of the input substrate (assuming acetate = 1.6 g/L,CO₂ = 1atm, pH 7), the observed value of OCP_{anode} (-0.323V vs. SHE) was very similar to the theoretical value. The OCP_{anode} (-0.323V) observed in this study is higher than the values (from -0.285V to -0. 214 V) from other studies using different types of the MFCs (Min et al., 2005a; Liu et al., 2005a).
The performance of the both anode and cathode decreased further with current generation between the two electrodes of the MFC. The OCP_{anode} of -0.518 V increased quickly to - 0.492 V at the lower current density indicating that there is a kinetic limitation. As more current generation applied, the anode potential further increased almost linearly up to - 0.254 V until the current density of 827 mA/m². The mass transport limiting on the anode was observed at the higher current density (> 827 mA/m²). On the other hand, the potential of the cathode decreased almost linearly from 0.198V of OCP_{cathode} down to - 0.043 V with an increase of the cell current generation without a sudden change of the potential as shown in the anode potential.

### Power output with different concentrations of the modified wastewater:

Different strength of wastewater was prepared by mixing with various amounts of acetate, and then the modified wastewater was loaded to the MFC for the power generation. The voltage measurements were conducted with a fixed resistor of 180 Ω, at which the maximum power was obtained at the previous polarization test. The power generation was immediately developed without a lag period after receiving the modified wastewaters (344 mg/L to 1584 mg/L SCOD), and average power density was calculated on the basis of data during the initial two-hour operation following a 1-hr stabilization period. The power generation as a function of wastewater strength showed a saturation curve over a range of the initial SCODs. This observation of saturation-type relationship of power output with respect to wastewater concentrations is consistent with the findings reported by other studies regardless of reactor configuration and substrates (Liu et al., 2005a). The maximum power density, Pₘₐₓ, in the equation for this hyperbola was 218 mW/m² with a half-saturation constant, Kₛ of 244 mg/L.

### Cell voltage and individual cell potential as a function of time:

Cell voltage decreased slowly with operational time at some experiments, especially during the longer period of the MFC operation. For determining the reason, short circuit potentials (SCP, at 470 Ω) of both anode and cathode were measured separately vs. an Ag/AgCl reference electrode as a function of operational time (Figure 7). The cell voltage of the SMFC was calculated based on the SCPs of the two electrodes (SCP_{cathode} - SCP_{anode}). For about 20 hrs of operation, the cell voltage and cathode potential decreased from 0.432V to 0.373V and from 0.094 to 0.008V, respectively. However, the performance of the anode potential increased a little bit by the decrease of the potential from -0.344 to -0.364V during that period. This result indicated that the optimization of a cathode in the SMFC is necessary for increasing power generation, especially for stable power generation in a continuous operation of the SMFC in the future. The SCOD of the wastewater decreased from 968 ± 3 mg/L to 826 ± 23 mg/L for 20 hrs operation (SCOD removal =14.7%, CE=6.5%).
The cathode electrode was dried almost completely, and then installed again at a nearly identical condition to the previous operation. However, the performance of the cathode was not recovered, even became worse comparing to the previous result (Figure 8). The cathode potential of 0.034 V was initially developed, and then decreased sharply down to - 0.131 V within about 21 hr. However, at this time, the anode potential decreased from - 0.402 V to -0.419V showing the increase of the anode performance. As a result, the significant decrease in cathode potential resulted in decreasing the cell voltage from 0.435V to 0.297V. The SCOD removal for 21 hours was only 2.4% (1004 to 980 mg/L) that was nearly 6 times less than that from the previous operation. The lower removal of the SCOD at this time could have been a result of less introduction of oxygen from the cathode chamber to the anode chamber (Liu et al., 2004; Min et al., 2005a). At the end of operation, the initial SCOD of 1004 ± 6 mg/L decreased to 940 ± 6 mg/L over about 52 hrs (SCOD removal= 6.4 %), but CE (27.9%) was increased about 4 times higher than that obtained in the previous run.
The above observation suggested that poor accessibility of oxygen to the cathode electrode decreased the performance of the cathode and the power generation, while possibly increasing CE due to low substrate oxidation by aerobic microorganisms in the MFC. Therefore, the performance of the cathode in the SMFC need to be further improved to generate high power and obtain better CE in the long period of operation, especially in the continuous mode.

### Conclusion:

The SMFC containing air cathode chamber could successfully generate electricity from wastewater amended with only acetate. The maximum power generation was 204 mW/m² with current density of 595 mA/m² at a circuit resistance of 180Ω (SCOD of wastewater =1672 ± 6 mg/L). The power output showed a saturation-type relationship as a function of wastewater concentration (SCOD), with a half saturation coefficient of Kₛ = 244 mg/L and a maximum power density of Pₘₐₓ = 244 mW/m². The OCP of the anode electrode was - 0.323V vs. SHE, which was a similar value to other studies. However, the cathode OCP of 0.393V (vs. SHE) was much less than the theoretical value (0.804 V, by 51% reduction), and smaller than the value (0.413V) from other type of air cathode MFC. The cathode potential showed the decrease of its performance as a function of time, and the performance was not recovered by removing the excess of water in the cathode chamber. These results suggested that the MFC can be used to generate power from the raw wastewater containing high substrate concentration, but need to improve the cathode chamber for higher and more stable power generation in the scale up field operation.

## Claims

1. A microbial fuel cell, comprising
(i) an anode electrode,
(ii) a cathode chamber, said cathode chamber comprising an inlet through which an influent enters the cathode chamber, an outlet through which an effluent depart the cathode chamber, a cathode electrode and an electrolyte permeable membrane,
wherein both the anode electrode and the cathode chamber are to be submersed into an anaerobic environment to generate electrical energy.

2. A microbial fuel cell, according to claim 1, wherein at least 40% of the cathode chamber is surrounded by the anaerobic environment, such as at least 50%, e.g. at least 60%, such as at least 70%, e.g. at least 80%, such as at least 90%, e.g. 100%.

3. A microbial fuel cell, according to claim 2, wherein at the most 90% of the cathode chamber is surrounded by the anode electrode, such as at the most 80 %, eg. at the most 70%, such as at the most 60 %, eg. at the most 50%, such as at the most 40 %, eg. at the most 30%, such as at the most 20 %, eg. at the most 10%, such as in the range of 10-60%, eg. in the range of 20-80%, such as in the range of 30-70%, eg. in the range of 40-50%.

4. A microbial fuel cell, according to any of the preceding claims, wherein the distance between the anode electrode and the cathode chamber is 5 cm or less, such as 4 cm or less, e.g. 3 cm or less, such as 2 cm or less, e.g. 1 cm or less.

5. A combined electrode, comprising:
(i) an anode electrode,
(ii) a cathode chamber, said cathode chamber comprising an inlet through which an influent enters the cathode chamber, an outlet through which an effluent depart the cathode chamber, a cathode electrode and an electrolyte permeable membrane,
wherein both the anode electrode and the cathode chamber are to be submersed into an anaerobic environment to generate electrical energy and wherein the anode electrode is in direct contact with the cathode chamber

6. A combined electrode, according to any of the preceding claims, wherein the cathode chamber is partly surrounded by the anode electrode

7. A combined electrode according to claim 6, wherein at the most 90% of the cathode chamber is surrounded by the anode electrode, such as at the most 80 %, eg. at the most 70%, such as at the most 60 %, eg. at the most 50%, such as at the most 40 %, eg. at the most 30%, such as at the most 20 %, eg. at the most 10%, such as in the range of 10-60%, eg. in the range of 20-80%, such as in the range of 30-70%, eg. in the range of 40-50%.

8. A combined electrode according to claims 5-37, wherein only one side of the cathode chamber is facing the anode electrode.

9. A combined electrode according to claims 5-8, wherein the anaerobic environment acts as an anode electrode chamber and wherein the anode electrode chamber is surrounding the cathode chamber

10. A method for obtaining bio-energy, said method comprises the steps of:
(i) submersing one or more anode electrode(s) and one or more cathode chamber(s), said cathode chamber comprising an inlet through which influent enters the cathode chamber, an outlet through which the effluent depart the cathode chamber, a cathode electrode and a electrolyte membrane and one or more combined electrodes into an anaerobic environment,
(ii) permitting microorganisms in the anaerobic environment to oxidize reduced organic or inorganic material thereby producing a plurality of electrons and
(iii) obtaining a voltage between the one or more anode electrode(s) and the one or more cathode electrode(s)

11. A method according to any of claim 10, wherein the microbial fuel cell is as defined in any one of claims 1-4.

12. A method according to any of claim10, wherein the combined electrode is as defined in any one of claims 1-4.

13. Use of the microbial fuel cell of claims 1-4 and the combined electrode of claims 5-9 for generation of electrical energy.

14. Use of the microbial fuel cell of claims 1-4 and the combined electrode of claims 5-9 for bioremediation.

15. Use of the microbial fuel cell of claims 1-4 and the combined electrode of claims 5-9 for use as a biosensor.
